# EUROPÄISCHE PATENTANMELDUNG

(11) **EP 0 963 092 A2**
(43) Veröffentlichungstag der Anmeldung: **08.12.1999**
(21) Anmeldenummer: 99110573.5
(22) Anmeldetag: 01.06.1999
(51) Int. Cl.: H04M 1/72, H04Q 11/04

(54) **Verfahren zum Übertragen von Kommunikationsinformation eines mobilen Endgeräts über eine Festnetz-Kommunikationsverbindung sowie entsprechendes Kommunikationssystem**

(30) Priorität: 04.06.1998 DE 19825059
(71) Anmelder: SIEMENS AKTIENGESELLSCHAFT, 80333 München (DE)
(72) Erfinder: Wewers, Otger, 46395 Bocholt (DE)

(57) **Zusammenfassung**

In einem Kommunikationssystem werden Kommunikationsinformationen eines rufenden mobilen Endgeräts (1a), die mit einer ersten Übertragungsrate vorliegen, über eine Festnetz-Kommunikationsverbindung (3), die für eine zweite Übertragungsrate ausgelegt ist, welche doppelt so hoch wie die erste Übertragungsrate des mobilen Endgeräts (1a) ist, zu einem gerufenen mobilen Endgerät (1b) übertragen. Dabei werden die Kommunikationsinformationen auch über die Festnetz-Kommunikationsverbindung (3) mit der ersten Übertragungsrate übertragen, um somit beispielsweise über einen B-Kanal (B₁, B₂) eines ISDN-Netzes (3) zwei Gespräche ohne zusätzliche Gesprächskosten übertragen zu können.

## Beschreibung

Die vorliegende Erfindung betrifft ein Verfahren zum Übertragen von Kommunikationsinformationen zwischen einem rufenden mobilen Endgerät und einem gerufenen mobilen Endgerät über eine Festnetz-Kommunikationsverbindung sowie ein entsprechendes Kommunikationssystem.

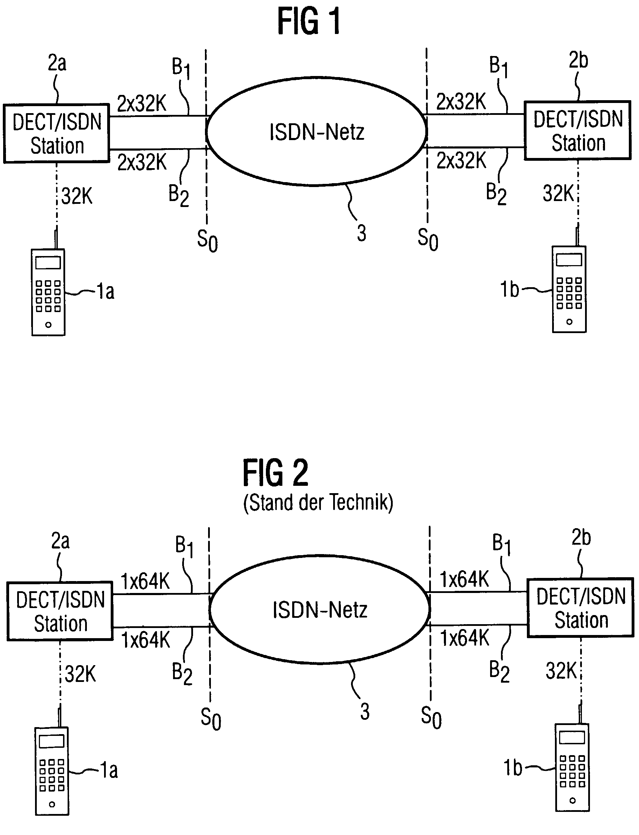

Fig. 2 zeigt schematisch den Aufbau eines bekannten Kommunikationssystems, wobei Kommunikationsinformationen zwischen mobilen Endgeräten 1a, 1b des DECT-Mobilfunkstandards über ein ISDN-Netz 3 übertragen werden.

Die beiden DECT-Endgeräte 1a und 1b übertragen Kommunikationsdaten gemäß dem sogenannten DECT-Standard (Digital Enhanced Cordless Telecommunications), bei dem es sich jedoch nicht um einen Mobilfunkstandard im eigentlichen Sinne, sondern um einen Standard für schnurlose Telefone handelt. DECT spezifiziert kein Netz für mobile Kommunikation, sondern definiert lediglich die Luftschnittstelle zwischen einer Basisstation und einem Mobilteil bzw. mobilen Endgerät. Der DECT-Standard ist der ideale Standard innerhalb räumlich definierter Gebiete, wobei aufgrund der relativ geringen Reichweite der Basisstation (zwischen 30 und 300 m) ein flächendeckendes DECT-Netz nicht realisiert werden kann und auch nicht angestrebt wird. Die Kommunikationsinformationen werden gemäß dem DECT-Standard typischerweise im Frequenzbereich 1880-1900 MHz übertragen, wobei der Kanalabstand 1728 kHz beträgt. Als Sprachcodierung wird gemäß dem DECT-Standard das sogenannte ADPCM-Verfahren (Adaptive Differential Pulse Code Modulation) eingesetzt, wobei die Kommunikationsinformationen mit einer Übertragungsrate von 32 kbit/s übertragen werden.

Bei dem ISDN-Netz 3 (Integrated Services Digital Network) handelt es sich um das diensteintegrierte digitale Telekommunikationsnetz, wobei pro ISDN-Teilnehmer zwei voneinander unabhängige B-Kanäle mit einer Übertragungsrate von jeweils 64 kbit/s bereitgestellt werden, welche zur Steuerung durch einen D-Kanal mit einer Übertragungsrate von 16 kbit/s ergänzt werden. Der Zugang zu den Telekommunikationsdiensten erfolgt über eine sogenannte Benutzer-Netzbetreiber-Schnittstelle S₀ der jeweils angeschlossenen Endgeräte, die auch als Basisanschluß S₀ bezeichnet wird. An einen S₀-Bus sind bis zu acht Endgeräte anschließbar. Der Übersichtlichkeit halber sind in Fig. 2 lediglich die den einzelnen ISDN-Teilnehmern zugeordneten beiden B-Kanäle B₁ und B₂ dargestellt.

Die beiden B-Kanäle B₁ und B₂ jedes S₀-Basisanschlusses ermöglichen, daß bei kleinen ISDN-Systemen zwei Gespräche parallel über die beiden B-Kanäle B₁, B₂ abgewickelt werden. Die Kommunikationsinformationen werden dabei über die B-Kanäle des ISDN-Netzes 3 - wie bereits zuvor erläutert worden ist - mit einer Übertragungsrate von 64 kbit/s übertragen, wobei zur Sprachcodierung die PCM (Pulse Code Modulation) angewendet wird und das Sprachfrequenzband 3,1 kHz umfaßt.

Bei der Kombination des zuvor erläuterten DECT-Standards mit einem ISDN-Kommunikationsnetz ist es demnach erforderlich, daß beispielsweise in dem mobilen DECT-Endgerät 1a die Nutz- bzw. Kommunikationsinformationen zunächst in ein 32 kbit/s-ADPCM-Signal umgewandelt und gemäß dem DECT-Standard zu einer entsprechenden Basis bzw. DECT/ISDN-Station 2a übertragen werden, um anschließend in ein 64 kbit/s-PCM-Signal transcodiert oder umgewandelt und über das ISDN-Netz 3 zu einer weiteren DECT/ISDN-Station 2b übertragen zu werden. Dort wird wiederum das 64 kbit/s-PCM-Signal in ein 32 kbit/s-ADPCM-Signal umgewandelt und gemäß dem DECT-Standard zu einem weiteren mobilen DECT-Endgerät 1b übertragen, wo schließlich die Kommunikationsinformation wiedergegeben werden kann.

Wie bereits zuvor erläutert worden ist, ermöglichen die pro DECT/ISDN-Station 2a, 2b bereitgestellten beiden B-Kanäle B₁ und B₂ des ISDN-Netzes 3, daß über diese beiden B-Kanäle zwei Gespräche parallel abgewickelt werden, d. h. die Kommunikationsinformationen des Endgeräts 1a werden beispielsweise über den B-Kanal B₁ übertragen, während gleichzeitig Kommunikationsinformationen eines weiteren der Station 2a zugeordneten DECT-Endgerätes über den zweiten B-Kanal B₂ übertragen werden. Für jeden benutzten B-Kanal sind jedoch separate Gebühren zu entrichten.

Dieselben Gebührenprobleme treten auch bei Kombination eines ISDN-Netzes mit mobilen Endgeräten eines anderen Mobilfunkstandards auf. Allgemein treten diese Probleme bei jeder Übertragung von Kommunikationsinformationen mobiler Endgeräte über ein Festnetz auf.

Der vorliegenden Erfindung liegt daher allgemein die Aufgabe zugrunde, ein Verfahren zum Übertragen von Kommunikationsinformationen mobiler Endgeräte über eine Festnetz-Kommunikationsverbindung sowie ein entsprechend ausgestaltetes Kommunikationssystem vorzuschlagen, wobei die für eine Verbindung zu entrichtenden Gebühren reduziert werden können.

Diese Aufgabe wird gemäß der vorliegenden Erfindung durch ein Übertragungsverfahren mit den Merkmalen des Anspruches 1 sowie ein Kommunikationssystem mit den Merkmalen des Anspruches 17 gelöst. Die Unteransprüche beschreiben jeweils bevorzugte und vorteilhaft Ausgestaltungen der vorliegenden Erfindung.

Die vorliegende Erfindung bezieht sich auf Kombinationen von mobilen Endgeräten und Festnetz-Verbindungsleitungen, wobei die mobilen Endgeräte Kommunikationsinformationen mit einer Übertragungsrate übertragen, die halb so hoch wie die Übertragungsrate der Festnetz-Verbindungsleitung ist. Werden die Kommunikationsinformationen der mobilen Endgeräte auch über die Festnetz-Verbindungsleitung mit der Übertragungsrate der mobilen Endgeräte übertragen, können über ein und denselben Kanal zwei Gespräche für die Gebühren eines Gespräches übertragen werden.

Die vorliegende Erfindung kann insbesondere auf DECT-Endgeräte angewendet werden, die über Anschlußstationen, welche als Schnittstelle dienen, an ein ISDN-Netz angeschlossen sind. Gemäß dem DECT-Mobilfunkstandard beträgt die Übertragungsrate ca. 32 kbit/s, während über IDSN-Leitungen Kommunikationsinformationen mit einer Übertragungsrate von ca. 64 kbit/s übertragen werden.

Insbesondere wird gemäß der vorliegenden Erfindung vorgeschlagen, zwischen kompatiblen Anschlußstationen bzw. Schnittstelleneinrichtungen , z.B. kompatiblen DECT/ISDN-Stationen, die Kommunikationsinformationen über das Festnetz mit der Übertragungsrate und dem Datenformat der mobilen Endgeräte zu übertragen. Anhand einer gespeicherten Liste kann jede einem rufenden mobilen Endgerät zugeordnete Anschlußstation feststellen, ob die für den gerufenen Teilnehmer zuständige Anschlußstation kompatibel ist, d. h. über das Festnetz mit der Übertragungsrate und dem Format der mobilen Endgeräte übertragene Kommunikationsinformationen verarbeiten kann. Dieser Vergleich kann insbesondere anhand der jeweils gewählten Rufnummer erfolgen.

Wurde erkannt, daß die dem gerufenen Endgerät zugeordnete Anschlußstation eine kompatible Station ist, werden die (gemäß dem DECT-Mobilfunkstandard beispielsweise als 32 kbit/s-ADPCM-Daten) vorliegenden Kommunikationsinformationen des rufenden mobilen Endgeräts über die Festnetz-Kommunikationsverbindung durchgeschaltet, wobei in diesem Fall von den übertragenen Kommunikationsinformationen lediglich ein Halbbyte jedes Kanaloktetts der Festnetz-Verbindung benutzt wird, so daß über das freie Halbbyte die Kommunikationsinformationen eines zweiten Gesprächs übertragen werden können, ohne daß zusätzliche Gebühren anfallen. Die Gesprächskosten für Teilnehmer des Kommunikationssystems können somit reduziert werden. Insbesondere können Teilnehmer, die zu einer organisatorischen Einheit gehören, wie z. B. eine Zentrale und ihre Filialen/Außenstellen, ihre Gesprächskosten und/oder die Anzahl der jeweiligen Verbindungen optimieren.

Ist der gerufene Teilnehmer an ein separates Festnetz angeschlossen, welches insbesondere über eine Fernverbindungsleitung mit dem Festnetz des rufenden Teilnehmers verbunden ist, kann selbst dann eine Reduzierung der Gesprächskosten erzielt werden, wenn auf der Seite des rufenden Teilnehmers erkannt wird, daß die über das Festnetz mit dem Format des rufenden mobilen Endgeräts übertragenen Kommunikationsdaten nicht auf der Seite des gerufenen Teilnehmers verarbeitet werden können, da in diesem Fall die Kommunikationsdaten mit dem Format und der Übertragungsrate des rufenden mobilen Endgeräts zumindest über die Festnetz-Fernverbindungsleitung zu dem Festnetz des gerufenen Teilnehmers übertragen werden können, um erst im Festnetz des gerufenen Teilnehmers in das erforderliche Festnetzformat mit der Festnetz-Übertragungsrate (d. h. bei einem ISDN-Netz in 64 kbit/s-PCM-Daten) umgewandelt zu werden. In diesem Fall kann wenigstens über die Fernverbindungsleitung ein zweites Gespräch auf ein und demselben Festnetz-Kanal übertragen werden, so daß wenigstens die Gesprächskosten für die Fernverbindungsleitung, die deutlich höher als diejenigen für Nahverbindungsleitungen sind, verringert werden können.

Gemäß einem bevorzugten Ausführungsbeispiel der Erfindung kann vorgesehen sein, daß in der zuvor erwähnten Tabelle, in welcher die kompatiblen Anschlußstationen des Kommunikationssystems gespeichert sind, standardmäßig diejenige einer Service-Rufnummer zugeordnete Anschlußstation abgelegt ist, so daß bei Wählen der Service-Rufnummer stets von der dem rufenden mobilen Endgerät zugeordneten Anschlußstation eine Festnetz-Kommunikationsverbindung mit dem Format und der Übertragungsrate des rufenden mobilen Endgeräts aufgebaut wird. In diesem Fall kann von dem der Service-Rufnummer zugeordneten Endgerät über den selben Kanal der Festnetz-Verbindung eine Service-Verbindung zu dem rufenden Teilnehmer aufgebaut werden, um beispielsweise über diese Service-Verbindung Daten von dem Endgerät des rufenden Teilnehmers abzufragen oder direkt bestimmte Einstellungen an diesem Endgerät vornehmen zu können, ohne daß zusätzliche Gesprächskosten hierfür anfallen.

Die vorliegende Erfindung wird nachfolgend näher anhand eines bevorzugten Ausführungsbeispiels unter Bezugnahme auf die beigefügte Zeichnung erläutert, wobei davon ausgegangen wird, daß es sich bei den mobilen Endgeräten um DECT-Endgeräte und bei dem Festnetz um ein ISDN-Netz handelt. Es wird jedoch ausdrücklich darauf hingewiesen, daß die vorliegende Erfindung nicht auf diese Kombination beschränkt ist, sondern auf jede Kombination von mobilen Endgeräten (z.B. insbesondere auch auf mobilen Endgeräten gemäß dem japanischen PHS-Mobilfunkstandard) mit einer Festnetz-Verbindungsleitung angewendet werden kann, falls die Festnetz-Verbindungsleitung für eine doppelt so hohe Übertragungsrate wie die Übertragungsrate der mobilen Endgeräte ausgelegt ist.
Fig. 1 zeigt eine vereinfachte Darstellung eines DECT/ISDN-Kommunikationssystems gemäß der vorliegenden Erfindung,
Fig. 2 zeigt eine vereinfachte Darstellung eines bekannten DECT/ISDN-Kommunikationssystems,
Fig. 3 zeigt eine vereinfachte Darstellung eines weiteren Ausführungsbeispiels eines DECT/ISDN-Kommunikationssystems gemäß der vorliegenden Erfindung, wobei mehrere ISDN-Netze über Fernverbindungsleitungen miteinander verbunden sind, und
Fig. 4 zeigt ein vereinfachtes Blockschaltbild des internen Aufbaus einer DECT/ISDN-Station gemäß der vorliegenden Erfindung.

Das Prinzip der vorliegenden Erfindung soll nachfolgend zunächst anhand Fig. 1 erläutert werden. Fig. 1 zeigt analog zu Fig. 2 ein ISDN-Netz 3, an das beispielhaft zwei DECT/ISDN-Stationen 2a bzw. 2b angeschlossen sind. Jede dieser DECT/ISDN-Stationen 2a, 2b ist mindestens einem mobilen DECT-Endgerät 1a bzw. 1b zugeordnet und dient als Schnittstelle zwischen dem jeweiligen DECT-Endgerät 1a, 1b und dem ISDN-Netz 3. Wie bereits zuvor erläutert worden ist, werden Kommunikationsdaten gemäß dem DECT-Standard in Form von 32 kbit/s-ADPCM-Daten zwischen den mobilen Endgeräten 1a, 1b und der jeweiligen DECT/ISDN-Station 2a, 2b übertragen. Diese Kommunikationsdaten werden von der jeweils zuständigen DECT/ISDN-Station 2a bzw. 2b in das ISDN-Kommunikationsnetz 3 eingespeist, zu der dem gerufenen DECT-Endgerät zuständigen DECT/ISDN-Station übertragen und von dort an das gerufene DECT-Endgerät weitergeleitet. Die ISDN-Verbindungsleitungen des ISDN-Netzes 3 sind standardmäßig zur Übertragung von 64 kbit/s-PCM-Kommunikationsdaten ausgelegt, d. h. jeder S₀-Basisanschluß des ISDN-Netzes 3 umfaßt (neben dem 16 kbit/s-D-Kanal) zwei 64 kbit/s-B-Kanäle B₁ und B₂.

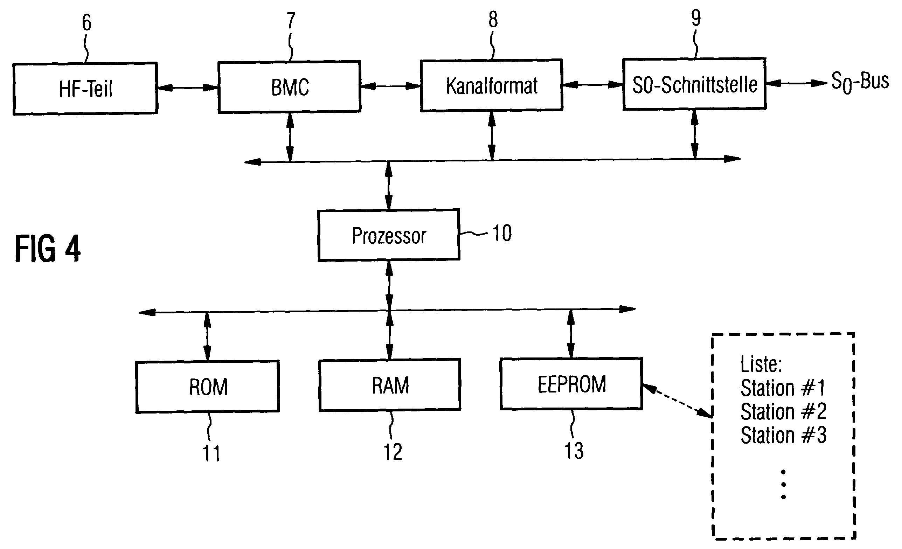

Gemäß der vorliegenden Erfindung wird nunmehr vorgeschlagen, die Kommunikationsdaten eines rufenden mobilen DECT-Endgeräts 1a, welche als 32 kbit/s-ADPCM-Daten vorliegen, im Prinzip unverändert mit Hilfe der entsprechenden DECT/ISDN-Station 2a in das ISDN-Netz 3 einzukoppeln und über einen entsprechenden B-Kanal B₁ oder B₂ zu der DECT/ISDN-Station 2b eines gerufenen Teilnehmers 1b zu übertragen, d. h. die 32 kbit/s-ADPCM-Daten des rufenden DECT-Endgeräts 1a werden über die entsprechende ISDN-Kommunikationsverbindung des ISDN-Netzes 3 geschaltet, obwohl dieses normalerweise für eine Übertragungsrate von 64 kbit/s ausgelegt ist. Dies ist jedoch nur dann möglich, wenn es sich bei der dem rufenden Teilnehmer 1b zugeordneten DECT/ISDN-Station 2b um eine kompatible Station handelt, die grundsätzlich über einen B-Kanal B₁, B₂ übertragene 32 kbit/s-ADPCM-Daten verarbeiten kann. Daher muß vor der eigentlichen Kommunikationsdatenübertragung die dem rufenden Teilnehmer 1a zugeordnete DECT/ISDN-Station 2a feststellen, ob dies der Fall ist. Dieser Überprüfungsvorgang soll nachfolgend näher anhand Fig. 4 erläutert werden.

Fig. 4 zeigt ein vereinfachtes Blockschaltbild des internen Aufbaus einer DECT/ISDN-Station der vorliegenden Erfindung, beispielsweise der in Fig. 1 gezeigten DECT/ISDN-Station 2a.

Zentraler Bestandteil der DECT/ISDN-Station der vorliegenden Erfindung ist ein Prozessor 10, der die zentrale Steuerung der Abläufe der DECT/ISDN-Station wahrnimmt. Der Prozessor 10 ist über einen Bus mit drei Speichern 11 - 13 verbunden. Bei dem Speicher 11 handelt es sich um einen Nur-Lese-Speicher (ROM), in dem beispielsweise das Steuerprogramm für den Prozessor 10 abgelegt ist. Bei dem Speicher 12 handelt es sich hingegen um einen Schreib-Lese-Speicher (RAM), in dem temporäre Daten, wie z. B. Arbeitsdaten des jeweiligen Benutzers, abgelegt werden können. Der dritte Speicher 13 umfaßt die für die vorliegende Erfindung maßgeblichen Kompatibilitätsdaten der anderen DECT-Stationen des jeweiligen Kommunikationsnetzes und ist derart ausgelegt, daß die in ihm gespeicherten Daten bei einem Versorgungsspannungsausfall nicht verloren gehen. Demzufolge kann der Speicher 13 in Form eines EEPROM realisiert sein.

Wie bereits erwähnt worden ist, sind in dem Speicher 13 Informationen darüber abgelegt, ob die an das jeweilige ISDN-Netz 3 angeschlossenen weiteren DECT/ISDN-Stationen für eine 32 kbit/s-ADPCM-ISDN-Übertragung kompatibel sind. In dem Speicher 13 kann demnach - wie in Fig. 4 angedeutet ist - eine Liste mit allen diesbezüglich kompatiblen DECT/ISDN-Stationen des Kommunikationsnetzes abgelegt sein.

Das ebenfalls in Fig. 4 gezeigte HF-Teil 6 der jeweiligen DECT/ISDN-Station dient zum Senden/Empfangen von gemäß dem DECT-Standard in Form von 32 kbit/s-ADPCM-Daten zu übertragenden Kommunikationsinformationen. Mit dem HF-Teil 6 ist eine Steuereinheit 7 in Form eines Burst Mode Controllers (BMC) gekoppelt, der zu übertragende Kommunikationsdaten in Blöcke (Bursts) packt bzw. empfangene Daten entpackt und die DECT-Schnittstelle für das HF-Teil 6 darstellt. Mit dem Burst Mode Controller 7 ist eine weitere Steuereinheit 8 gekoppelt, die die über das HF-Teil 6 empfangenen Daten in ein über den jeweiligen B-Kanal des S₀-Bus zu der entsprechenden DECT/ISDN-Station zu übertragendes Format umwandelt. Hat der Prozessor 10 über das HF-Teil 6 eine Verbindungsanfrage für den Aufbau einer Kommunikationsverbindung über den S₀-Bus der entsprechenden DECT/ISDN-Station empfangen, greift der Prozessor 10 auf die in dem Speicher 13 abgelegte Liste zu und prüft anhand der Rufnummer des gerufenen Teilnehmers, ob dem gerufenen Endgerät eine kompatible DECT/ISDN-Station zugeordnet ist. Ist dies nicht der Fall, veranlaßt der Prozessor 10 die Steuereinheit 8, die über das HF-Teil 6 empfangenen 32 kbit/s-ADPCM-Daten in das übliche 64 kbit/s-PCM-ISDN-Format umzuwandeln und über die S₀-Schnittstelle 9 und den daran angeschlossenen S₀-Bus zu dem gewünschten Zielteilnehmer zu übertragen.

Hat hingegen der Prozessor 10 durch Überprüfung der Liste des Speichers 13 festgestellt, daß auch dem gerufenen Teilnehmer eine DECT/ISDN-Station zugeordnet ist, die in der Lage ist, die ihr über den entsprechenden S₀-Bus, d.h. die entsprechende ISDN-Verbindungsleitung, zugeführten 32 kbit/s-ADPCM-Daten zu empfangen, veranlaßt der Prozessor 10 die Steuereinheit 8, die von dem HF-Teil 6 empfangenen Kommunikationsdaten im Prinzip unverändert durchzuschalten, d.h. von der Steuereinheit 8 werden die empfangenen Kommunikationsdaten über die S₀-Schnittstelle 9 als 32 kbit/s-ADPCM-Daten abgesetzt und über das jeweilige ISDN-Kommunikationsnetz zu der dem gerufenen Teilnehmer zugeordneten DECT/ISDN-Station übertragen. Aufgrund der in diesem Fall gegenüber einer normalen ISDN-Übertragung halbierten Übertragungsrate von 32 kbit/s wird somit jedes Byte bzw. Oktett des gewählten B-Kanals der entsprechenden ISDN-Verbindung nur zur Hälfte mit den zu übertragenden Kommunikationsdaten belegt, so daß über das verbleibende freie Halbbyte (Nibble) die Kommunikationsdaten einer weiteren Gesprächsverbindung übertragen werden können. Die hierzu notwendige Signalisierung kann ebenfalls mit Hilfe des freien Halbbytes abgewickelt werden.

Somit können über jeden B-Kanal des entsprechenden S₀-Bus der jeweiligen DECT/ISDN-Station die Kommunikationsdaten zweier Gespräche übertragen werden, wobei lediglich die Kosten eines Gesprächs für die Benutzung des jeweiligen B-Kanals zu entrichten sind. Entsprechend können bei Nutzung beider B-Kanäle insgesamt vier statt bisher nur zwei Gespräche gleichzeitig übertragen werden. Dieser Zustand ist in Figur 1 dargestellt, woraus hervorgeht, daß über jeden B-Kanal des jeweiligen S₀-Basisanschlusses der entsprechenden DECT/ISDN-Station 2a bzw. 2b die Gesprächsdaten von zwei Gesprächen gleichzeitig in Form von 32 kbit/s-ADPCM-Kommunikationsdaten übertragen werden können, während dies bei dem in Figur 2 gezeigten bekannten Kommunikationssystem nicht möglich und lediglich die Übertragung der Gesprächsdaten eines Gesprächs über jeden B-Kanal in Form von 64 kbit/s-PCM-Kommunikationsdaten realisiert ist.

Gemäß einem bevorzugten Ausführungsbeispiel der vorliegenden Erfindung kann beispielsweise vorgesehen sein, daß ein Eintrag der in dem Speicher 13 abgelegten Liste für eine 32 kbit/s-ADPCM-ISDN-Übertragung kompatiblen DECT/ISDN-Stationen einer Service-Rufnummer entspricht. Hat beispielsweise der in Figur 1 gezeigte DECT-Teilnehmer 1a Fragen zu den Einstellungen seines Endgeräts, kann er die jeweilige Service-Rufnummer bzw. Hotline anwählen, wobei aufgrund des in der Liste abgelegten Eintrags von der dem rufenden Teilnehmer zugeordneten DECT/ISDN-Station 2a automatisch eine 32 kbit/s-ADPCM-Kommunikationsverbindung über das jeweilige ISDN-Netz 3 zu dem der gerufenen Service-Rufnummer zugeordneten Endgerät aufgebaut wird. Das heißt - wie bereits zuvor erläutert worden ist - der jeweils gewählte B-Kanal des S₀-Bus der DECT/ISDN-Station 2a ist nur zur Hälfte belegt, d.h. mit den Kommunikationsdaten dieser Kommunikationsverbindung ist lediglich ein Halbbyte des jeweiligen B-Kanaloktetts belegt. Eine Person, die unter der gerufenen Service-Rufnummer das Gespräch annimmt, kann somit über denselben B-Kanal zusätzlich zu der eigentlichen Kommunikationsverbindung eine Service-Verbindung aufbauen, die die noch freien Halbbytes desselben B-Kanals belegt, um auf diese Weise automatisch bestimmte Einstellungen des DECT-Endgeräts 1a des rufenden und um Hilfe suchenden DECT-Teilnehmers zu fragen. Ebenso ist über diese Service-Verbindung, die über denselben B-Kanal ohne zusätzlichen Kostenaufwand läuft, die Übertragung bestimmter Steuerinformationen an das DECT-Endgerät 1a möglich, um auf diese Weise bestimmte Einstellungen an dem DECT-Endgerät 1a vornehmen zu können, so daß das DECT-Endgerät 1a abhängig von den Problemen des Anrufers automatisch durch das jeweilige Servicepersonal eingestellt werden kann.

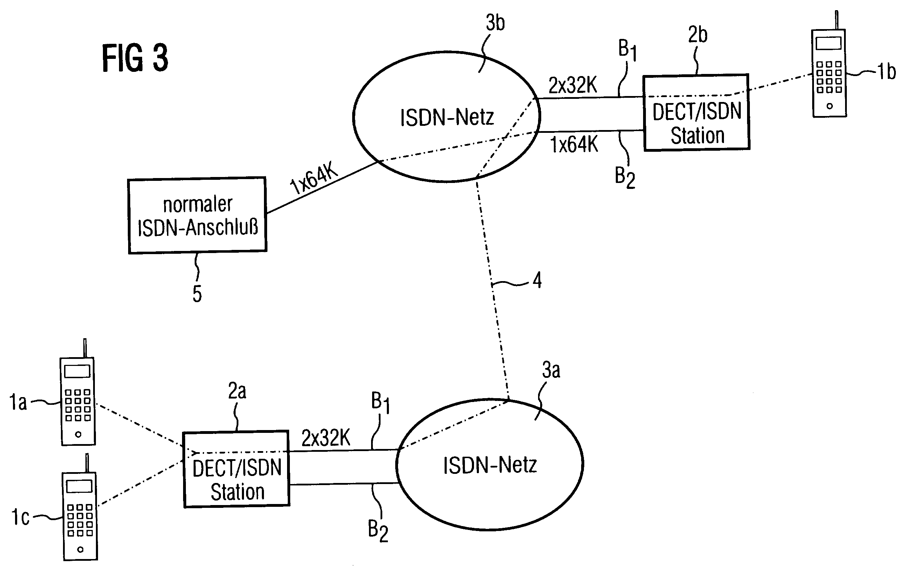

Zusätzlich zu der anhand Figur 1 erläuterten Anwendung ist auch eine Reduzierung der Gesprächskosten selbst dann möglich, wenn für den gerufenen Teilnehmer des Kommunikationssystems kein Eintrag in der Kompatibilitätsliste des Speichers 13 (vgl. Fig. 4) gefunden werden konnte, falls die für den rufenden Teilnehmer zuständige DECT/ISDN-Station 2a und die für den gerufenen Teilnehmer zuständige DECT/ISDN-Station 2b über eine Fernverbindungsleitung miteinander verbunden sind. Dies soll nachfolgend näher anhand Figur 3 erläutert werden.

Figur 3 zeigt wieder zwei DECT/ISDN-Stationen 2a bzw. 2b, die jeweils für mehrere DECT-Endgeräte 1a und 1c bzw. 1b zuständig sind. Die beiden DECT/ISDN-Stationen 2a und 2b sind an unterschiedliche lokale ISDN-Netze 3a bzw. 3b angeschlossen, die über eine ISDN-Fernverbindungsleitung 4 miteinander gekoppelt sind. Des weiteren sei im folgenden angenommen, daß der dem mobilen DECT-Endgerät 1a zugeordnete Teilnehmer den dem DECT-Endgerät 1b zugeordneten Teilnehmer anruft.

Anhand der am DECT-Endgerät 1a gewählten Rufnummer überprüft nunmehr die zuständige DECT/ISDN-Station 2a, ob die für den gerufenen Teilnehmer zuständige DECT/ISDN-Station 2b in ihrer Kompatibilitätsliste eingetragen ist. Ist dies der Fall, wird - wie bereits zuvor anhand Figur 1 und 4 erläutert worden ist - eine 32 kbit/s-ADPCM-Kommunikationsverbindung über entsprechende B-Kanäle der beiden ISDN-Netze 3a und 3b aufgebaut, was in Figur 3 beispielhaft anhand des B-Kanals B₁ angedeutet ist.

Konnte hingegen von der DECT/ISDN-Station 2a kein Eintrag bezüglich der DECT/ISDN-Station 2b in ihrer Kompatibilitätsliste gefunden werden, baut die DECT/ISDN-Station 2a trotzdem über das ISDN-Netz 3a und die ISDN-Fernverbindungsleitung 4 eine 32 kbit/s-Verbindung auf, die jedoch zunächst nur bis zu dem ISDN-Netz 3b reicht. In diesem Fall wird von dieser Verbindung wiederum lediglich ein Halbbyte des jeweiligen B-Kanals belegt, so daß die DECT/ISDN-Station 2a über das freie Halbbyte des jeweiligen B-Kanals prüfen kann, ob die dem gerufenen Teilnehmer 1b zugeordnete DECT/ISDN-Station 2b einen freien B-Kanal B₁ oder B₂ aufweist. Ist dies der Fall, können die über die Fernverbindungsleitung 4 übertragenen 32 kbit/s-ADPCM-Daten mit Hilfe eines freien ADPCM/PCM-Transcoders des ISDN-Netzes 3b in das für die DECT/ISDN-Station 2b erforderliche 64 kbit/s-PCM-Format umgewandelt und zu der DECT/ISDN-Station 2b übertragen werden. Über die ISDN-Fernverbindungsleitung 4 werden jedoch die Kommunikationsdaten weiterhin in Form von 32 kbit/s-ADPCM-Kommunikationsdaten übertragen, so daß über denselben B-Kanal der Fernverbindungsleitung 4 ein weiteres Gespräch übertragen werden kann. Mit dieser Maßnahme ist es somit möglich, auch bei mangelnder Kompatibilität der für den gerufenen Teilnehmer zuständigen DECT/ISDN-Station 2b Gesprächskosten dadurch einzusparen, daß die die Gesamtgesprächskosten im wesentlichen bestimmenden Gebühren für die Fernverbindungsleitung 4 reduziert werden. Der parallele Verbindungsaufbau über die Fernverbindungsleitung 4 kann gegebenenfalls durch eine Gesprächsvormerkung zusätzlich optimiert werden.

Ergänzend ist in Figur 3 ein normaler ISDN-Anschluß 5 für ein entsprechendes ISDN-Endgerät dargestellt, wobei bei Anwählen dieses ISDN-Anschlusses 5 die Kommunikationsdaten zwischen dem entsprechenden ISDN-Netz 3b und dem ISDN-Anschluß 5 stets in Form von 64 kbit/s-PCM-Daten übertragen werden.

## Patentansprüche

1. Verfahren zum Übertragen von Kommunikationsinformationen zwischen einem rufenden mobilen Endgerät (1a) und einem gerufenen mobilen Endgerät (1b) über eine Festnetz-Kommunikationsverbindung (3), wobei die Kommunikationsinformationen des rufenden mobilen Endgeräts (1a) mit einer ersten Übertragungsrate vorliegen und die Festnetz-Kommunikationsverbindung (3) für eine zweite Übertragungsrate ausgelegt ist, welche doppelt so hoch wie die erste Übertragungsrate der mobilen Endgeräte (1a, 1b) ist,
**dadurch gekennzeichnet,**
daß die Kommunikationsinformationen über die Festnetz-Kommunikationsverbindung (3) mit der ersten Übertragungsrate übertragen werden.

2. Verfahren nach Anspruch 1,
**dadurch gekennzeichnet,**
daß die mobilen Endgeräte (1a, 1b) DECT-Endgeräte sind.

3. Verfahren nach Anspruch 1 oder 2,
**dadurch gekennzeichnet,**
daß die Kommunikationsinformationen des rufenden Endgeräts (1a) in Form eines ersten Formats mit der ersten Übertragungsrate vorliegen und die Kommunikationsinformationen mit dem ersten Format über die Festnetz-Kommunikationsverbindung (3) übertragen werden.

4. Verfahren nach Anspruch 2 und 3,
**dadurch gekennzeichnet,**
daß das erste Format ein ADPCM-kodiertes Format ist.

5. Verfahren nach Anspruch 3 oder 4,
**dadurch gekennzeichnet,**
daß die Kommunikationsinformationen des rufenden mobilen Endgeräts (1a) in ein zweites Format umgewandelt und mit der zweiten Übertragungsrate über die Festnetz-Kommunikationsverbindung (3) zu dem gerufenen Teilnehmer übertragen werden, falls vor der Übertragung festgestellt wird, daß über die Festnetz-Kommunikationsverbindung (3) mit der ersten Übertragungsrate und dem ersten Format übertragene Kommunikationsinformationen auf der Seite des gerufenen Teilnehmers nicht verarbeitet werden können.

6. Verfahren nach Anspruch 5,
**dadurch gekennzeichnet,**
daß das zweite Format ein PCM-kodiertes Format ist.

7. Verfahren nach einem der Ansprüche 3 bis 6,
**dadurch gekennzeichnet,**
daß die Kommunikationsinformationen mit dem ersten Format und der ersten Übertragungsrate über die Festnetz-Kommunikationsverbindung (3) übertragen werden, falls zuvor festgestellt worden ist, daß die über die Festnetz-Kommunikationsverbindung (3) mit der ersten Übertragungsrate und dem ersten Format übertragenen Kommunikationsinformationen auf der Seite des gerufenen Teilnehmers verarbeitet werden können.

8. Verfahren nach Anspruch 7,
**dadurch gekennzeichnet,**
daß jedem mobilen Endgerät (1a - 1c) eine Schnittstelleneinrichtung (2a - 2b) als Schnittstelle zu der Festnetz-Kommunikationsverbindung (3) zugeordnet ist, und daß anhand eines Datensatzes, in dem diejenigen Schnittstelleneinrichtungen gespeichert sind, welche über die Festnetz-Kommunikationsverbindung (3) mit dem ersten Format und der ersten Übertragungsrate übertragene Daten verarbeiten können, vor der Übertragung geprüft wird, ob die einem gerufenen mobilen Endgerät (1b) zugeordnete Schnittstelleneinrichtung (2b) die über die Festnetz-Kommunikationsverbindung (3) mit dem ersten Format und der ersten Übertragungsrate übertragenen Kommunikationsinformationen verarbeiten kann.

9. Verfahren nach Anspruch 8,
**dadurch gekennzeichnet,**
daß die Prüfung, ob die dem gerufenen mobilen Endgerät (1b) zugeordnete Schnittstelleneinrichtung (2b) zur Verarbeitung der mit dem ersten Format und der ersten Übertragungsrate über die Festnetz-Kommunikationsverbindung (3) übertragenen Kommunikationsinformationen in der Lage ist, anhand des Datensatzes auf Grundlage der Rufnummer des gerufenen mobilen Endgeräts (1b) durchgeführt wird.

10. Verfahren nach Anspruch 5 oder 6 und Anspruch 8 oder 9,
**dadurch gekennzeichnet,**
daß, falls vor der Übertragung festgestellt wird, daß die dem gerufenen mobilen Endgerät (1b) zugeordnete Schnittstelleneinrichtung (2b) nicht in dem Datensatz gespeichert ist und die Schnittstelleneinrichtungen (2a, 2b) des rufenden mobilen Endgeräts (1a) bzw. des gerufenen mobilen Endgeräts (1b) über eine Festnetz-Fernverbindungsleitung (4) an getrennte Festnetze (3a, 3b) angeschlossen sind, die Kommunikationsinformationen von der dem rufenden mobilen Endgerät (1a) zugeordneten Schnittstelleneinrichtung (2a) mit der ersten Übertragungsrate und dem ersten Format über das Festnetz (3a) der Schnittstelleneinrichtung (2a) des rufenden mobilen Endgeräts (1a) und die Festnetz-Fernverbindungsleitung (4) übertragen und erst in dem Festnetz (3b) der Schnittstelleneinrichtung (2b) des gerufenen mobilen Endgeräts (1b) in das zweite Format mit der zweiten Übertragungsrate umgewandelt und der Schnittstelleneinrichtung (2b) des gerufenen mobilen Endgeräts (1b) zugeführt werden.

11. Verfahren nach einem der Ansprüche 8 bis 10,
**dadurch gekennzeichnet,**
daß der Datensatz als einen Eintrag die einer Service-Rufnummer zugeordnete Schnittstelleneinrichtung enthält.

12. Verfahren nach Anspruch 11,
**dadurch gekennzeichnet,**
daß bei Anrufen der Service-Rufnummer von einem rufenden mobilen Endgerät (1a) aus eine Gesprächsverbindung über einen Kanal der entsprechenden Festnetz-Kommunikationsverbindung (3) mit der ersten Übertragungsrate zu der der gerufenen Service-Rufnummer entsprechenden Schnittstelleneinrichtung aufgebaut wird, und
daß über die von der Gesprächsverbindung nicht belegten Halbbytes des entsprechenden Kanals der Festnetz-Kommunikationsverbindung (3) von einem der Service-Rufnummer zugeordneten mobilen Endgerät aus eine Service-Verbindung über die Festnetz-Kommunikationsverbindung (3) mit der ersten Übertragungsrate zu dem rufenden mobilen Endgerät (1a) aufgebaut wird.

13. Verfahren nach einem der vorhergehenden Ansprüche,
**dadurch gekennzeichnet,**
daß die Kommunikationsinformationen über einen Kanal der Festnetz-Kommunikationsverbindung (3) übertragen werden, wobei die Kommunikationsinformationen jeweils lediglich ein Halbbyte eines Bytes des entsprechenden Kanals belegen.

14. Verfahren nach Anspruch 13,
**dadurch gekennzeichnet,**
daß Signalisierungsinformationen in den nicht von den Kommunikationsinformationen belegten Halbbytes des entsprechenden Kanals der Festnetz-Kommunikationsverbindung (3) übertragen werden.

15. Verfahren nach Anspruch 13 oder 14,
**dadurch gekennzeichnet,**
daß über einen Kanal der Festnetz-Kommunikationsverbindung (3) die Kommunikationsinformationen zweier Gespräche zwischen dem rufenden mobilen Endgerät (1a) und dem gerufenen Teilnehmer (1b) übertragen werden, wobei die Kommunikationsinformationen des einen Gesprächs über das eine Halbbyte und die Kommunikationsinformationen des anderen Gespräches über das andere Halbbyte eines jeden Bytes des entsprechenden Kanals übertragen werden.

16. Verfahren nach einem der vorhergehenden Ansprüche,
**dadurch gekennzeichnet,**
daß die Festnetz-Kommunikationsverbindung (3) eine ISDN-Kommunikationsverbindung ist, und
daß die erste Übertragungsrate ca. 32 kbit/s und die zweite Übertragungsrate ca. 64 kbit/s beträgt.

17. Kommunikationssystem,
mit mehreren Schnittstelleneinrichtungen (2a, 2b), welche über eine Festnetz-Kommunikationsverbindung (3) miteinander verbunden und jeweils mindestens einem mobilen Endgerät (1a - 1c) zugeordnet sind,
wobei jede Schnittstelleneinrichtung (2a, 2b) als Schnittstelle zwischen den ihr zugeordneten mobilen Endgeräten (1a - 1c) und der entsprechenden Festnetz-Kommunikationsverbindung (3) dient, und
wobei die Übertragung von Kommunikationsinformationen zwischen jeder Schnittstelleneinrichtung (2a, 2b) und den ihr zugeordneten mobilen Endgeräten (1a - 1c) mit einer ersten Übertragungsrate erfolgt und die Festnetz-Kommunikations-verbindung (3) für eine zweite Übertragungsrate ausgelegt ist, die doppelt so hoch wie die erste Übertragungsrate ist
**dadurch gekennzeichnet,**
daß mindestens eine Schnittstelleneinrichtung (2a, 2b) umfaßt:
Speichermittel (13) zum Speichern von Informationen über diejenigen Schnittstelleneinrichtungen (2a, 2b) des Kommunikationssystems, die zur Verarbeitung von mit der ersten Übertragungsrate über die Festnetz-Kommunikationsverbindung (3) übertragenen Kommunikationsinformationen in der Lage sind, und
Steuermittel (8, 10), welche bei Vorliegen einer Verbindungsanfrage eines entsprechenden rufenden mobilen Endgeräts (1a) anhand der Speichermittel (13) überprüfen, ob die dem gerufenen mobilen Endgerät (1b) zugeordnete Schnittstelleneinrichtung (2b) zur Verarbeitung von mit der ersten Übertragungsrate über die Festnetz-Kommunikationsverbindung (3) übertragenen Kommunikationsinformationen in der Lage ist, und bei positivem Ergebnis der Überprüfung die Übertragung der Kommunikationsinformationen des rufenden mobilen Endgeräts (1a) über die Festnetz-Kommunikationsverbindung (3) mit der ersten Übertragungsrate herbeiführen.

18. Kommunikationssystem nach Anspruch 17,
**dadurch gekennzeichnet,**
daß die Übertragung der Kommunikationsinformationen zwischen jeder Schnittstelleneinrichtung (2a, 2b) und dem ihr zugeordneten mobilen Endgerät (1a - 1c) mit einem ersten Format erfolgt,
wobei die Steuermittel (10, 8) bei positivem Ergebnis der Überprüfung die Übertragung der Kommunikationsinformationen des rufenden mobilen Endgeräts (1a) über die Festnetz-Kommunikationsverbindung (3) mit dem ersten Format herbeiführen.

19. Kommunikationssystem nach Anspruch 17 oder 18,
**dadurch gekennzeichnet,**
daß die mobilen Endgeräte (1a, 1b) DECT-Endgeräte sind.

20. Kommunikationssystem nach Anspruch 18 und 19,
**dadurch gekennzeichnet,**
daß das erste Format ein ADPCM-kodiertes Format ist.

21. Kommunikationssystem nach einem der Ansprüche 17 bis 20,
**dadurch gekennzeichnet,**
daß die Festnetz-Kommunikationsverbindung (3) eine ISDN-Kommunikationsverbindung ist und die zweite Übertragungsrate ca. 64 kbit/s beträgt.

22. Kommunikationssystem nach einem der Ansprüche 17 bis 21,
**dadurch gekennzeichnet,**
daß die Steuermittel (10, 8) derart ausgestaltet sind, daß sie die Übertragung der Kommunikationsinformationen des rufenden mobilen Endgeräts (1a) zu einem gerufenen mobilen Endgerät (1b) gemäß einem Verfahren nach einem der Ansprüche 1 - 16 steuern.
